# EUROPÄISCHE PATENTSCHRIFT

(11) **EP 3 027 366 B1**
(45) Veröffentlichungstag und Bekanntmachung des Hinweises auf die Patenterteilung: **25.10.2017**
(21) Anmeldenummer: 14729666.9
(22) Anmeldetag: 13.06.2014
(51) Int. Cl.: B25F 5/00

(54) **HANDWERKZEUGMASCHINENENERGIEVERSORGUNGSVORRICHTUNG**
DEVICE FOR SUPPLYING A HAND-HELD POWER TOOL WITH ENERGY
DISPOSITIF D'ALIMENTATION EN ÉNERGIE D'UNE MACHINE-OUTIL PORTATIVE

(30) Priorität: 31.07.2013 DE 102013214971
(43) Veröffentlichungstag der Anmeldung: 08.06.2016
(73) Patentinhaber: Robert Bosch GmbH, 70442 Stuttgart (DE)
(72) Erfinder: KRAPF, Reiner, 70794 Filderstadt (DE); SGARZ, Heiko, 71229 Leonberg (DE); SCHUSTER, Ulrich, 10827 Berlin (DE)
(86) Internationale Anmeldenummer: PCT/EP2014/062309
(87) Internationale Veröffentlichungsnummer: WO 2015/014524

(56) Entgegenhaltungen:
- DE-A1-102008 044 401
- GB-A- 2 400 058
- US-A1- 2005 069 391
- US-A1- 2009 251 330
- US-A1- 2010 202 846
- US-A1- 2011 025 207

## Beschreibung

### Stand der Technik

Es sind bereits Handwerkzeugmaschinenenergieversorgungsvorrichtungen zu einer Energieversorgung von Handwerkzeugmaschinen bekannt, die eine Handwerkzeugmaschinenschnittstelle zu einer abnehmbaren Anordnung an einer Handwerkzeugmaschine aufweisen. Ein Beispiel derartiger Handwerkzeugmaschinenenergieversorgungsvorrichtungen findet sich in US 2005/069391 A1.

Ferner offenbaren DE 10 2008 044401 A1 und US 2009/251330 A1 Handwerkzeugmaschinen, die Sensoren zur Temperaturmessung aufweisen.

### Offenbarung der Erfindung

Die Erfindung geht aus von einer Handwerkzeugmaschinenenergieversorgungsvorrichtung, insbesondere von einer Handwerkzeugmaschinenakkumulatorvorrichtung, zu einer Energieversorgung einer Handwerkzeugmaschine, mit zumindest einer Handwerkzeugmaschinenschnittstelle zu einer abnehmbaren Anordnung an der Handwerkzeugmaschine.

Es wird vorgeschlagen, dass die Handwerkzeugmaschinenenergieversorgungsvorrichtung zumindest eine Ortungseinheit zumindest zu einer Ortung von Gegenständen in einem Werkstück und/oder zu einer Erfassung einer Gegenstandstemperatur eines in einem Werkstück angeordneten Gegenstands umfasst. Die Handwerkzeugmaschinenenergieversorgungsvorrichtung umfasst besonders bevorzugt zumindest eine Energieübertragungsschnittstelle zur Energieversorgung der Handwerkzeugmaschine. Hierbei ist vorzugsweise mittels der Energieübertragungsschnittstelle eine Spannung und/oder ein Strom übertragbar, die und/oder der groß genug sind/ist, die Handwerkzeugmaschine zu betreiben. Unter "vorgesehen" soll insbesondere speziell programmiert, ausgelegt und/oder ausgestattet verstanden werden. Darunter, dass ein Objekt zu einer ter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Bevorzugt ist die Handwerkzeugmaschinenenergieversorgungsvorrichtung zumindest dazu vorgesehen, eine Antriebseinheit zu einer Inbetriebnahme und während eines Betriebs mit einer Energie zu versorgen, insbesondere mit elektrischer Energie zu versorgen.

Vorzugsweise ist die Handwerkzeugmaschinenschnittstelle als lösbare Formschluss- und/oder Kraftschlussverbindungsschnittstelle ausgebildet. Unter "lösbar" soll in diesem Zusammenhang insbesondere zerstörungsfrei trennbar verstanden werden. Somit ist die Handwerkzeugmaschinenenergieversorgungsvorrichtung bevorzugt mittels der Handwerkzeugmaschinenschnittstelle abnehmbar an einer Energieversorgungsaufnahmeschnittstelle eines Werkzeugmaschinengehäuses der Handwerkzeugmaschine anordenbar. Hierbei ist vorzugsweise eine Gehäuseeinheit der Handwerkzeugmaschinenenergieversorgungsvorrichtung zusammen mit der Ortungseinheit mittels der Handwerkzeugmaschinenschnittstelle an einer Energieversorgungsaufnahmeschnittstelle eines Werkzeugmaschinengehäuses der Handwerkzeugmaschine anordenbar. Die Handwerkzeugmaschinenschnittstelle ist bevorzugt an der Gehäuseeinheit der Handwerkzeugmaschinenenergieversorgungsvorrichtung angeordnet. Somit ist vorzugsweise die Gehäuseeinheit zusammen mit der Ortungseinheit mittels der Handwerkzeugmaschinenschnittstelle abnehmbar an der Handwerkzeugmaschine anordenbar. Die Handwerkzeugmaschinenenergieversorgungsvorrichtung umfasst somit bevorzugt zumindest eine Gehäuseeinheit, die zumindest die Handwerkzeugmaschinenschnittstelle zu einer abnehmbaren Anordnung der Gehäuseeinheit an einer Handwerkzeugmaschine aufweist.

Die Ortungseinheit umfasst bevorzugt zumindest ein Ortungselement zu einer Ortung von Gegenständen, wie beispielsweise Stromleitungen, metallischen Elementen, ferromagnetischen Elementen, Fluidleitungen usw. Hierzu kann das Ortungselement als Induktivsensor, als Kapazitivsensor, als 50Hz-Sensor, als Radarsensor, als Röntgensensor, als NMR-Sensor (Nuclear-Magnetic-Resonance-Sensor), als Terahertzsensor, als Infrarotsensor, als (Ultra-)Schallsensor usw. ausgebildet sein. Es ist jedoch auch denkbar, dass die Ortungseinheit eine von einem Ortungselement abweichende Anzahl an Ortungselementen aufweist. Hierbei ist es denkbar, dass die Ortungseinheit eine Vielzahl gleichartiger Sensoren aufweist, um eine vorteilhafte Richtungsschärfe der Ortungseinheit zu ermöglichen, oder dass die Ortungseinheit unterschiedliche Sensoren aufweist, um eine Detektion verschiedenartiger Gegenstände und/oder Gegenstandstemperaturen von Gegenständen mittels der Ortungseinheit in einem Werkstück zu ermöglichen. Bevorzugt umfasst die Ortungseinheit zumindest einen Induktivsensor und zusätzlich zumindest einen AC-Sensor. Somit können vorteilhaft sowohl Metallgegenstände als auch spannungsführende Elektroleitungen in einem Werkstück, wie beispielsweise einer Wand usw. mittels der Ortungseinheit geortet werden. In einer alternativen Ausgestaltung der Ortungseinheit umfasst die Ortungseinheit vorzugsweise zumindest einen Radarsensor, zusätzlich zumindest einen AC-Sensor und zusätzlich zumindest einen Induktivsensor. Hierdurch kann vorteilhaft zusätzlich zu einer Ortung von Gegenständen im Werkstück auch deren Material/Materialeigenschaft (spannungsführend/ spannungsführungsfrei, metallhaltig/metallfrei, ferromagnetisch/ferromagnetfrei) bestimmt werden. Zudem ist es denkbar, dass die Ortungseinheit alternativ oder zusätzlich zumindest einen Infrarotsensor umfasst. Hierdurch kann vorteilhaft eine Temperatur des Gegenstands bestimmt werden und/oder eine Position des Gegenstands im Werkstück kann erfasst werden, wie beispeilsweise eine Position eines Heizungsrohrs usw. Es ist jedoch auch denkbar, dass die Ortungseinheit einen anderen, einem Fachmann als sinnvoll erscheinenden Temperatursensor zu einer Erfassung einer Temperatur eines Gegenstands umfasst. In einer weiteren alternativen Ausgestaltung der Ortungseinheit umfasst die Ortungseinheit vorzugsweise eine Vielzahl an gleichartigen Ortungselementen. Hierdurch können verschiedene Gegenstände im Werkstück vorteilhaft einfach voneinander getrennt geortet werden oder ein Verlauf eines Gegenstands im Werkstück kann vorteilhaft bestimmt werden. Besonders bevorzugt umfasst die Ortungseinheit hierzu zumindest eine Sensormatrix der Ortungselemente. Hiermit kann vorteilhaft eine Kompensation zumindest einer Einflussgröße von leitfähigen und/oder metallhaltigen Elementen der Handwerkzeugmaschinenenergieversorgungsvorrichtung ermöglicht werden.

Ferner umfasst die Ortungseinheit zumindest eine Kalibrierungsfunktion zu einer Kalibrierung der Ortungseinheit zumindest nach einem Anordnen an der Handwerkzeugmaschine. Besonders bevorzugt wird die Ortungseinheit, insbesondere zumindest ein Ortungselement der Ortungseinheit, automatisch nach einer Anordnung an der Handwerkzeugmaschine kalibriert. Eine manuell startbare Kalibrierung mittels der Kalibrierungsfunktion infolge einer Eingabe eines Bedieners ist ebenfalls denkbar. Eine automatische Kalibrierung, die über einen Werkstückkontaktsensor gesteuert ist, ist ebenfalls denkbar.

Bevorzugt ist die Ortungseinheit fest mit der Gehäuseeinheit der Handwerkzeugmaschinenenergieversorgungsvorrichtung verbunden. Hierbei ist die Ortungseinheit vorzugsweise mittels einer formschlüssigen, mittels einer kraftschlüssigen und/oder mittels einer stoffschlüssigen Verbindung mit der Gehäuseeinheit der Handwerkzeugmaschinenenergieversorgungsvorrichtung verbunden. Hierbei ist es denkbar, dass die Ortungseinheit ein Ortungsgehäuse umfasst, das fest mit der Gehäuseeinheit der Handwerkzeugmaschinenenergieversorgungsvorrichtung verbunden ist. Eine einteilige Ausgestaltung des Ortungsgehäuses der Ortungseinheit mit der Gehäuseeinheit der Handwerkzeugmaschinenenergieversorgungsvorrichtung ist ebenfalls denkbar. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Die Ortungseinheit ist vorzugsweise auf einer der Handwerkzeugmaschinenschnittstelle abgewandten Seite der Gehäuseeinheit der Handwerkzeugmaschinenenergieversorgungsvorrichtung an oder in der Gehäuseeinheit der Handwerkzeugmaschinenenergieversorgungsvorrichtung angeordnet. Mittels der erfindungsgemäßen Ausgestaltung der Handwerkzeugmaschinenenergieversorgungsvorrichtung kann vorteilhaft eine hohe Sicherheit gegen eine ungewollte Bearbeitung von in einem Werkstück befindlichen Gegenständen erreicht werden, wobei die Ortungseinheit vorteilhaft unverlierbar an der Gehäuseeinheit der Handwerkzeugmaschinenenergieversorgungsvorrichtung angeordnet ist. Zudem kann vorteilhaft eine hohe Einsatzvariabilität erreicht werden, da die Handwerkzeugmaschinenenergieversorgungsvorrichtung mit der Ortungseinheit an verschiedenen Handwerkzeugmaschinen anordenbar ist. Ferner kann vorteilhaft eine Nachrüstbarkeit von Handwerkzeugmaschinen ermöglicht werden, die von Werk aus keine Ortungsfunktion umfassen.

In einer alternativen Ausgestaltung der erfindungsgemäßen Handwerkzeugmaschinenenergieversorgungsvorrichtung wird vorgeschlagen, dass die Handwerkzeugmaschinenenergieversorgungsvorrichtung zumindest eine Ortungseinheitsaufnahmeschnittstelle zu einer Aufnahme einer Ortungseinheit, insbesondere einer separat zur Handwerkzeugmaschinenenergieversorgungsvorrichtung ausgebildeten Ortungseinheit, zumindest in einem an der Handwerkzeugmaschine angeordneten Zustand umfasst. Die Ortungseinheit, insbesondere die separat zur Handwerkzeugmaschinenenergieversorgungsvorrichtung ausgebildete Ortungseinheit, umfasst hierbei bevorzugt zumindest ein Ortungsgehäuse, das zumindest eine zu der Ortungseinheitsaufnahmeschnittstelle korrespondierende Kopplungsschnittstelle aufweist. Die Ortungseinheitsaufnahmeschnittstelle ist vorzugsweise auf einer der Handwerkzeugmaschinenschnittstelle abgewandten Seite der Gehäuseeinheit der Handwerkzeugmaschinenenergieversorgungsvorrichtung an der Gehäuseeinheit der Handwerkzeugmaschinenenergieversorgungsvorrichtung angeordnet. Die Ortungseinheit, insbesondere die separat zur Handwerkzeugmaschinenenergieversorgungsvorrichtung ausgebildete Ortungseinheit, ist somit bevorzugt abnehmbar an der Gehäuseeinheit, insbesondere abnehmbar an der Ortungseinheitsaufnahmeschnittstelle, der Handwerkzeugmaschinenenergieversorgungsvorrichtung anordenbar. Die Ortungseinheitsaufnahmeschnittstelle ist vorzugsweise als formschlüssig und/oder als kraftschlüssig wirkende Verbindungschnittstelle ausgebildet, wie beispielsweise als Rastelementschnittstelle, als Bajonettverschlussschnittstelle, als Klettverschlussverbindungsschnittstelle, als Einschubverbindungsschnittstelle usw. Vorzugsweise umfasst die Ortungseinheit, insbesondere die separat zur Handwerkzeugmaschinenenergieversorgungsvorrichtung ausgebildete Ortungseinheit, zumindest eine Energieversorgungs- und/oder Energiespeichereinheit, die dazu vorgesehen ist, die Ortungseinheit, insbesondere die separat zur Handwerkzeugmaschinenenergieversorgungsvorrichtung ausgebildete Ortungseinheit, in einem von der Handwerkzeugmaschinenenergieversorgungsvorrichtung abgenommenen Zustand mit Energie zu versorgen. Hierbei ist es denkbar, dass die Energieversorgungs- und/oder Energiespeichereinheit der Ortungseinheit, insbesondere der separat zur Handwerkzeugmaschinenenergieversorgungsvorrichtung ausgebildeten Ortungseinheit, in einem an der Handwerkzeugmaschinenenergieversorgungsvorrichtung angeordneten Zustand von einer Energiespeichereinheit der Handwerkzeugmaschinenenergieversorgungsvorrichtung mit Energie versorgt wird, um beispielsweise die Energieversorgungs- und/oder Energiespeichereinheit der Ortungseinheit, insbesondere der separat zur Handwerkzeugmaschinenenergieversorgungsvorrichtung ausgebildeten Ortungseinheit, aufzuladen usw. Mittels der erfindungsgemäßen Ausgestaltung der Handwerkzeugmaschinenenergieversorgungsvorrichtung kann vorteilhaft eine hohe Einsatzvariabilität erreicht werden, da die Handwerkzeugmaschinenenergieversorgungsvorrichtung mit der Ortungseinheit an verschiedenen Handwerkzeugmaschinen anordenbar ist. Ferner kann vorteilhaft eine Nachrüstbarkeit von Handwerkzeugmaschinen ermöglicht werden, die von Werk aus keine Ortungsfunktion umfassen. Des Weiteren kann vorteilhaft ein Betrieb der Ortungseinheit, insbesondere der separat zur Handwerkzeugmaschinenenergieversorgungsvorrichtung ausgebildeten Ortungseinheit, ermöglicht werden, der unabhängig von der Handwerkzeugmaschinenenergieversorgungsvorrichtung ist. Somit kann vorteilhaft die Ortungseinheit, insbesondere die separat zur Handwerkzeugmaschinenenergieversorgungsvorrichtung ausgebildete Ortungseinheit, von der Handwerkzeugmaschinenenergieversorgungsvorrichtung abgenommen werden, um beispielsweise an schwer zugänglichen Stellen eine Ortung von Gegenständen in einem Werkstück zu ermöglichen.

Des Weiteren wird vorgeschlagen, dass die Handwerkzeugmaschinenenergieversorgungsvorrichtung zumindest eine Ausgabeeinheit zu einer Ausgabe eines Signals in Abhängigkeit einer mittels der Ortungseinheit erfassten Ortungskenngröße umfasst. Die Ausgabeeinheit kann als akustische, als optische und/oder als haptische Ausgabeeinheit ausgebildet sein. Die Ortungskenngröße ist vorzugsweise als Positionskenngröße und/oder als Temperaturkenngröße eines Gegenstands in einem Werkstück ausgebildet. Somit wird bevorzugt in Abhängigkeit einer erfassten Position eines Gegenstands im Werkstück mittels der Ausgabeeinheit ein Signal ausgegeben. Das Signal kann hierbei ein Aufleuchten einer Lichtquelle (LED, LCD, Glühbirne, Halogenbirne usw.), eine graphische Anzeige (LCD, Projektion auf ein Werkstück usw.), eine Vibration und/oder weitere, einem Fachmann als sinnvoll erscheinende Signale sein. Hierbei ist es denkbar, dass die Handwerkzeugmaschinenenergieversorgungsvorrichtung zusätzlich zur Ausgabeeinheit eine Markiereinheit umfasst, die dazu vorgesehen ist, eine Position des in einem Werkstück georteten Gegenstands auf einer Oberfläche des Werkstücks zu markieren, wie beispielsweise mittels einer Lichtmarkierung, mittels einer Farbmarkierung (Stempel, Stift, Tinte, Sprayfarbe usw.), insbesondere mittels einer wiederentfernbaren Farbmarkierung usw. Ferner ist die Ausgabeeinheit vorzugsweise dazu vorgesehen, zusätzlich zu einer Ausgabe eines Signals in Abhängigkeit einer Ortungskenngröße der Ortungseinheit eine Energiespeicherkenngröße der Energiespeichereinheit der Handwerkzeugmaschinenenergieversorgungsvorrichtung auszugeben, wie beispielsweise eine als Ladezustandsanzeige ausgebildete Energiespeicherkenngröße, eine als mögliche Betriebsdauer ausgebildete Energiespeicherkenngröße usw. Die Handwerkzeugmaschinenenergieversorgungsvorrichtung weist bevorzugt zumindest eine Auswerteeinheit zu einer Auswertung von zumindest einer mittels der Ortungseinheit erfassten Ortungskenngröße auf. Die Auswerteeinheit ist ferner vorzugsweise dazu vorgesehen, die Ausgabeeinheit anzusteuern, um ein Signal in Abhängigkeit einer Ortungskenngröße der Ortungseinheit auszugeben. Somit sind die Ausgabeeinheit und die Auswerteeinheit bevorzugt zu einer Übermittlung von Daten miteinander verbunden. Mittels der Auswerteeinheit können vorzugsweise beispielsweise Sensoramplituden, Sensorphasen, Parameter aus einem Objekterkennungsalgorithmus usw. ausgewertet werden. Die ausgewerteten Daten können dann beispielsweise mittels einer Balkenanzeige, mittels einer Signalstärkeanzeige, mittels einer Positionsanzeiger ausgegeben werden und es kann/können ein Objektverlauf, eine Objektart, eine Objekttiefe, eine Objektdimension, ein Objektmaterial, eine Objekttemperatur usw. beschrieben oder bestimmt werden. Mitteln. Mittels der erfindungsgemäßen Ausgestaltung kann vorteilhaft ein hoher Bedienkomfort erreicht werden, da einem Bediener vorteilhaft einfach eine Information über einen georteten Gegenstand mittgeteilt werden kann. Zudem können einem Bediener vorteilhaft Informationen hinsichtlich einer Art, einer Position usw. des Gegenstands angezeigt werden, die dem Bediener eine vorteilhaft effektive Bearbeitung eines Werkstücks ermöglichen, die weitestgehend frei von einem ungewollten Bearbeiten eines Gegenstands im Werkstück ist. Somit können vorteilhaft Folgeschäden, die beispielsweise bei einer ungewollten Bearbeitung eines im Werkstück befindlichen Gegenstands (Wasserleitung, Elektroleitung usw.) entstehen können, zumindest weitestgehend verhindert werden.

Ferner wird vorgeschlagen, dass die Handwerkzeugmaschinenenergieversorgungsvorrichtung zumindest eine Energiespeichereinheit umfasst, die zumindest dazu vorgesehen ist, die Ortungseinheit zumindest in einem Zustand mit Energie zu versorgen. Vorzugsweise ist die Energiespeichereinheit zudem dazu vorgesehen, die Handwerkzeugmaschine mit Energie zu versorgen, insbesondere in einem an der Handwerkzeugmaschine angeordneten Zustand der Gehäuseeinheit der Handwerkzeugmaschinenenergieversorgungsvorrichtung. Bevorzugt ist die Energiespeichereinheit als Akkumulatoreinheit ausgebildet. Hierbei ist die Energiespeichereinheit vorzugsweise dazu vorgesehen, die Ortungseinheit zumindest während eines Betriebszustands zu einer Erkennung von Gegenständen in einem Werkstück mit Energie zu versorgen. Die Energiespeichereinheit ist in der alternativen Ausgestaltung der Handwerkzeugmaschinenenergieversorgungsvorrichtung insbesondere dazu vorgesehen, die Ortungseinheit, insbesondere die separat zur Handwerkzeugmaschinenenergieversorgungsvorrichtung ausgebildete Ortungseinheit, in einem mittels der Ortungseinheitsaufnahmeschnittstelle an der Gehäuseeinheit der Handwerkzeugmaschinenenergieversorgungsvorrichtung mit Energie zu versorgen. Es ist jedoch auch denkbar, dass die Ortungseinheit, insbesondere die separat zur Handwerkzeugmaschinenenergieversorgungsvorrichtung ausgebildete Ortungseinheit, eine eigene Energieversorgungs- und/oder Energiespeichereinheit, wie beispielsweise zumindest eine Sekundärzelle, zumindest eine Primärzelle, zumindest einen Kondensator usw. umfasst. Zudem ist es denkbar, dass die die Ortungseinheit, insbesondere die separat zur Handwerkzeugmaschinenenergieversorgungsvorrichtung ausgebildete Ortungseinheit, ein Inbetriebnahmeelement umfasst oder sich nach Verbindung mit der Handwerkzeugmaschine und/oder der Handwerkzeugmaschinenenergieversorgungsvorrichtung automatisch für eine vorgegebene Zeitspanne in einem aktivierten Zustand befindet, insbesondere sobald die Handwerkzeugmaschine in Betrieb genommen wird und/oder der Handwerkzeugmaschinenenergieversorgungsvorrichtung Energie entzogen wird. Ferner ist es denkbar, dass die Ortungseinheit eine automatische Erkennungsfunktion von zu bearbeitenden Werkstücken, wie beispielsweise Gebäudeteilen, aufweist. Mittels der Erkennungsfunktion könnte eine Ortung der Ortungseinheit automatisch nach einem Aufsetzen auf ein Werkstück erfolgen. Hierzu umfasst die Ortungseinheit bevorzugt zumindest einen Radarsensor oder andere, einem Fachmann als sinnvoll erscheinenden Werkstückkontakterkennungselemente, wie beispielsweise einen optischen Sensor, eine Lichtschranke, einen Kapazitivsensor, einen Kontaktschalter usw. Denkbar ist hier auch ein Neigungssensor, ein Beschleunigungs- oder Kompasssensor usw., die dazu vorgesehen sind, ein Kippen der Handwerkzeugmaschine und/oder der Handwerkzeugmaschinenenergieversorgungsvorrichtung automatisch zu erkennen. Infolge einer Kontakterkennung oder einer Kipperkennung erfolgt vorzugsweise eine automatische Energieversorgung der Ortungseinheit mittels der Energiespeichereinheit. Mittels der erfindungsgemäßen Ausgestaltung kann vorteilhaft eine Energieversorgung der Ortungseinheit sichergestellt werden. Zudem können vorteilhaft Kosten eingespart werden, da auf eine zusätzliche Energiequelle zur Versorgung der Ortungseinheit verzichtet werden kann.

Zudem wird vorgeschlagen, dass die Handwerkzeugmaschinenenergieversorgungsvorrichtung zumindest eine Datenkommunikationsschnittstelle zu einer Übertragung zumindest einer mittels der Ortungseinheit erfassten Ortungskenngröße auf zumindest eine Steuer- und/oder Regeleinheit der Handwerkzeugmaschine und/oder auf ein externes Datengerät aufweist. Bevorzugt verwendet die Datenkommunikationsschnittstelle ein standardisiertes Kommunikationsprotokoll zu einer Übertragung von elektronischen Daten. Hierbei ist es denkbar, dass die Datenkommunikationsschnittstelle zumindest teilweise von der Energieübertragungsschnittstelle, insbesondere von zumindest einem Kontaktelement der Energieübertragungsschnittstelle, gebildet wird. Es ist jedoch auch denkbar, dass die Datenkommunikationsschnittstelle von einer drahtlosen Schnittstelle gebildet wird, wie beispielsweise von einer WLAN-Schnittstelle, von einer Bluetooth-Schnittstelle, von einer Infrarot-Schnittstelle, von einer NFC-Schnittstelle (beispielsweise von einer RFID-Schnittstelle) oder einer anderen, einem Fachmann als sinnvoll erscheinenden drahtlosen Schnittstelle. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Das externe Datengerät kann hierbei als Smartphone, als Tablet, als PC oder als weiteres, einem Fachmann als sinnvoll erscheinendes externes Datengerät ausgebildet sein. Mittels der erfindungsgemäßen Ausgestaltung kann vorteilhaft eine Übertragung von Daten ermöglicht werden, die zu einer Auswertung von mittels der Ortungseinheit erfassten Ortungskenngrößen nutzbar ist. Ferner können vorteilhaft Zusatzfunktionen ermöglicht werden, wie beispielsweise eine automatische Mappingfunktion von Leitungen, von gebohrten Löchern usw., oder eine Nivellierfunktion z.B. eines Bohrers oder eine Trackingfunktion von Handwerkzeugmaschinen und/oder der Handwerkzeugmaschinenenergieversorgungsvorrichtung oder eine Wärmebildkartenerstellungsfunktion zu einer Erstellung einer Wärmebildkarte.

Des Weiteren wird vorgeschlagen, dass die Handwerkzeugmaschinenenergieversorgungsvorrichtung zumindest eine Isolationseinheit zu einer zumindest teilweisen Abschirmung der Ortungseinheit vor thermischen Störgrößen aufweist. Vorzugsweise ist die Isolationseinheit zumindest dazu vorgesehen, zumindest ein Ortungselement zumindest teilweise vor thermischen Störgrößen abzuschirmen. Hierbei ist die Isolationseinheit bevorzugt dazu vorgesehen, das zumindest eine Ortungselement zumindest teilweise vor thermischen, metallischen und/oder spannungstechnischen Störgrößen abzuschirmen, deren Ursprung in der Handwerkzeugmaschinenenergieversorgungsvorrichtung liegt. Somit umfasst die Isolationseinheit zumindest ein Isolationselement, das die Ortungseinheit und insbesondere die Energiespeichereinheit thermisch voneinander zumindest im Wesentlichen entkoppelt. Es ist jedoch auch denkbar, dass die Handwerkzeugmaschinenenergieversorgungsvorrichtung zumindest eine weitere Isolationseinheit umfasst, die die Ortungseinheit zumindest teilweise vor anderen Störgrößen abschirmt. Bevorzugz wird vorgeschlagen, dass die Handwerkzeugmaschinenenergieversorgungsvorrichtung einen Temperatursensor umfasst, insbesondere einen in der Gehäuseeinheit integrierten Temperatursensor, der dazu vorgesehen ist, zumindest eine Temperaturkenngröße an die Ortungseinheit zu übermitteln. Hierdruch ist in einem Bedarfsfall eine Kompensationsmaßnahme einleitbar, wie z.B. eine Rekalibierung oder Korrektur des aktuellen Ortungswertes anhand von in einer digitalen abgelegten Tabelle Werten. Der Temperatursensor kann hiebrei drahtgebunden oder drahtlos mit der Ortunseinheit, insbesondere mit der separat zur Handwerkzeugmaschinenenergieversorgungsvorrichtung ausgebildeten Ortungseinheit, verbunden sein. Hierzu umfasst die Handwerkzeugmaschinenenergieversorgungsvorrichtung zumindest eine Schnittstelle zu einer Ermöglichung einer Datenübertragung zwischen der Ortungseinheit, insbesondere zwischen der separat zur Handwerkzeugmaschinenenergieversorgungsvorrichtung ausgebildeten Ortungseinheit, und dem Temperatursensor zur Übermittlung von aktuellen Temperaturen. Mittels der erfindungsgemäßen Ausgestaltung der Handwerkzeugmaschinenenergieversorgungsvorrichtung kann vorteilhaft ein zuverlässiger Betrieb der Ortungseinheit sichergestellt werden. Es kann vorteilhaft einer Überhitzung der Ortungseinheit entgegengewirkt werden, was zu einer langen Lebensdauer führt.

Ferner wird vorgeschlagen, dass die Handwerkzeugmaschinenenergieversorgungsvorrichtung zumindest die Gehäuseeinheit umfasst, in der die Ortungseinheit zumindest teilweise angeordnet ist. Hierbei ist die Ortungseinheit insbesondere zu mehr als 30 %, bevorzugt zu mehr als 50 % und besonders bevorzugt zu mehr als 60 % eines Gesamtvolumens der Gehäuseeinheit innerhalb der Gehäuseeinheit angeordnet. Es kann vorteilhaft eine kompakte Anordnung der Ortungseinheit ermöglicht werden. Zudem kann die Ortungseinheit vorteilhaft vor Beschädigungen, vor Umwelteinflüssen, vor Staub usw. geschützt werden.

Zudem geht die Erfindung aus von der Ortungseinheit der erfindungsgemäßen Handwerkzeugmaschinenenergieversorgungsvorrichtung. Hierdurch kann vorteilhaft eine kostengünstige Nachrüstlösung zur Verfügung gestellt werden, insbesondere im Fall der alternativen Ausgestaltung der Handwerkzeugmaschinenenergieversorgungsvorrichtung mit zumindest der Ortungseinheitsaufnahmeschnittstelle zu einer Aufnahme der Ortungseinheit zumindest in einem an der Handwerkzeugmaschine angeordneten Zustand.

Des Weiteren geht die Erfindung aus von einem Handwerkzeugmaschinensystem mit zumindest einer Handwerkzeugmaschine und mit zumindest einer erfindungsgemäßen Handwerkzeugmaschinenenergieversorgungsvorrichtung. Unter einer "Handwerkzeugmaschine" soll hier insbesondere eine Werkzeugmaschine zu einer Bearbeitung von Werkstücken verstanden werden, die von einem Bediener transportmaschinenlos transportiert werden kann. Die Handwerkzeugmaschine weist insbesondere eine Masse auf, die kleiner ist als 40 kg, bevorzugt kleiner ist als 10 kg und besonders bevorzugt kleiner ist als 5 kg. Die Handwerkzeugmaschine kann hierbei als Bohr- und/oder Meißelhammer, als Schlagbohrmaschine, als Bohrmaschine, als Stichsäge, als Kreissäge, als Kappsäge usw. ausgebildet sein. Mittels des erfindungsgemäßen Handwerkzeugmaschinensystems kann vorteilhaft eine Bearbeitung von Werkstücken ermöglicht werden, bei der vorteilhaft eine ungewollte Bearbeitung von im Werkstück befindlichen Gegenständen vermeidbar ist.

Ferner wird vorgeschlagen, dass die Handwerkzeugmaschine zumindest eine Steuer- und/oder Regeleinheit aufweist, die dazu vorgesehen ist, zumindest ein Betriebsfunktionsparameter der Handwerkzeugmaschine in Abhängigkeit von zumindest einer mittels der Ortungseinheit erfassten Ortungskenngröße einzustellen. Hierbei ist es denkbar, dass mittels einer Kommunikation der Ortungseinheit und der Handwerkzeugmaschine Informationen über ein Werkstückmaterial zur Verfügung gestellt werden können, mittels denen zumindest ein Betriebsfunktionsparameter wie z.B. eine Drehzahl, eine Schwingungsdämpfung oder eine Schlagenergie durch die Steuer- und/oder Regeleinheit automatisch einstellbar ist. Ferner ist es denkbar, dass mittels einer Kommunikation der Ortungseinheit und der Handwerkzeugmaschine Informationen über eine Tiefe eines georteten Gegenstands zur Verfügung gestellt werden können, die zu einer Einstellung und/oder Begrenzung einer maximalen Bohrtiefe durch die Steuer- und/oder Regeleinheit nutzbar ist. Hierzu umfasst die Handwerkzeugmaschine vorzugsweise zumindest einen Bohrtiefensensor. Zudem ist es denkbar, dass infolge einer Kommunikation der Ortungseinheit und der Handwerkzeugmaschine zumindest eine Schutzmaßnahme, wie beispielsweise ein automatisches Abschalten, ein automatisches Verriegeln usw., durch die Steuer- und/oder Regeleinheit einleitbar ist, wenn mittels der Ortungseinheit beispielsweise ein zu Boden fallen der Handwerkzeugmaschine erkannt wird. Des Weiteren ist es denkbar, dass mittels einer Kommunikation der Ortungseinheit und der Handwerkzeugmaschine eine berührungslose Steuerung, wie beispielsweise eine Gestensteuerung, der Handwerkzeugmaschine, insbesondere bei einer Ausgestaltung der Ortungseinheit mit zumindest einem Radarsensor, durch die Steuer- und/oder Regeleinheit realisierbar ist. Mittels der erfindungsgemäßen Ausgestaltung kann somit vorteilhaft ein hoher Bedienkomfort erreicht werden.

Die erfindungsgemäße Handwerkzeugmaschinenenergieversorgungsvorrichtung, die erfindungsgemäße Ortungseinheit und/oder das erfindungsgemäße Handwerkzeugmaschinensystem sollen/soll hierbei nicht auf die oben beschriebene/n Anwendung/en und Ausführungsform/en beschränkt sein. Insbesondere können/kann die erfindungsgemäße Handwerkzeugmaschinenenergieversorgungsvorrichtung, die erfindungsgemäße Ortungseinheit und/oder das erfindungsgemäße Handwerkzeugmaschinensystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Handwerkzeugmaschinensystem mit einer erfindungsgemäßen Handwerkzeugmaschine und mit einer erfindungsgemäßen Handwerkzeugmaschinenenergieversorgungsvorrichtung in einer schematischen Darstellung,
- Fig. 2: eine Detailansicht eines Teilschnitts der erfindungsgemäßen Handwerkzeugmaschinenenergieversorgungsvorrichtung in einem von der erfindungsgemäßen Handwerkzeugmaschine abgenommenen Zustand in einer schematischen Darstellung,
- Fig. 3: eine beispielhafte Anordnung einer Ortungseinheit der erfindungsgemäßen Handwerkzeugmaschinenenergieversorgungsvorrichtung in einer Gehäuseeinheit der erfindungsgemäßen Handwerkzeugmaschinenenergieversorgungsvorrichtung in einer schematischen Darstellung,
- Fig. 4: eine weitere beispielhafte Anordnung einer Ortungseinheit der erfindungsgemäßen Handwerkzeugmaschinenenergieversorgungsvorrichtung in einer Gehäuseeinheit der erfindungsgemäßen Handwerkzeugmaschinenenergieversorgungsvorrichtung in einer schematischen Darstellung,
- Fig. 5: eine weitere beispielhafte Anordnung einer Ortungseinheit der erfindungsgemäßen Handwerkzeugmaschinenenergieversorgungsvorrichtung in einer Gehäuseeinheit der erfindungsgemäßen Handwerkzeugmaschinenenergieversorgungsvorrichtung in einer schematischen Darstellung,
- Fig. 6: eine Detailansicht einer alternativen erfindungsgemäßen Handwerkzeugmaschinenenergieversorgungsvorrichtung in einer schematischen Darstellung und
- Fig. 7: eine beispielhafte Anordnung einer Ortungseinheit der erfindungsgemäßen Handwerkzeugmaschinenenergieversorgungsvorrichtung an einer Gehäuseeinheit der alternativen erfindungsgemäßen Handwerkzeugmaschinenenergieversorgungsvorrichtung in einer schematischen Darstellung.

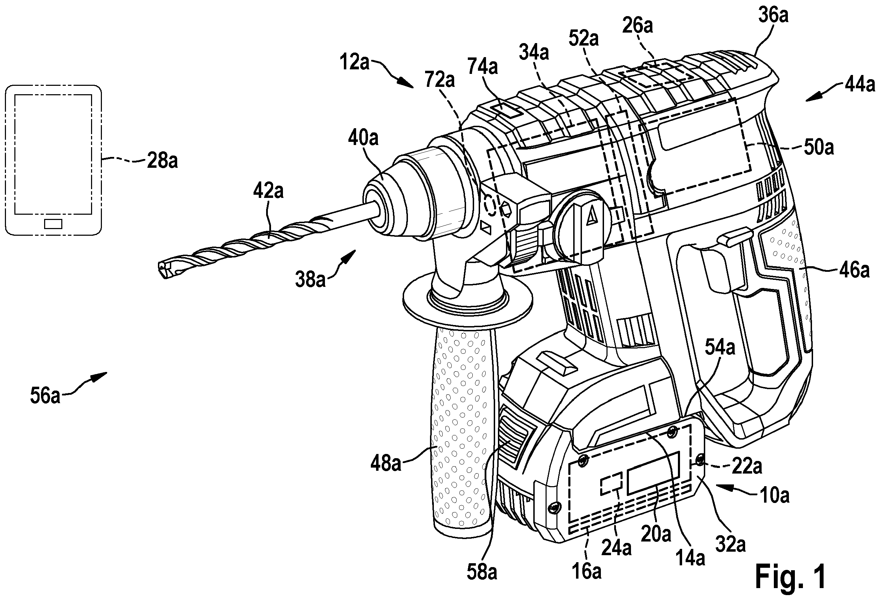

Figur 1 zeigt ein Handwerkzeugmaschinensystem 56a, das zumindest eine Handwerkzeugmaschine 12a und zumindest eine Handwerkzeugmaschinenenergieversorgungsvorrichtung 10a umfasst. Die Handwerkzeugmaschine 12a ist als Bohr- und/oder Meißelhammer ausgebildet. Es ist jedoch auch denkbar, dass die Handwerkzeugmaschine 12a in einer alternativen, hier nicht dargestellten Ausgestaltung als andere, einem Fachmann als sinnvoll erscheinende Handwerkzeugmaschine ausgebildet ist, wie beispielsweise als Schlagbohrmaschine, als Bohrmaschine, als Stichsäge, als Kreissäge, als Kappsäge usw. Die in der Figur 1 dargestellte Handwerkzeugmaschine 12a umfasst zumindest eine Schlagwerkvorrichtung 34a zu einer Erzeugung eines Schlagimpulses in zumindest einem Betriebszustand der Handwerkzeugmaschine 12a. Ferner umfasst die Handwerkzeugmaschine 12a ein Werkzeugmaschinengehäuse 36a, an dem in einem Frontbereich 38a eine Werkzeugaufnahme 40a der Handwerkzeugmaschine 12a zu einer Aufnahme eines Einsatzwerkzeugs 42a angeordnet ist. An einer dem Frontbereich 38a abgewandten Seite 44a umfasst die Handwerkzeugmaschine 12a einen Haupthandgriff 46a zu einer Führung der Handwerkzeugmaschine 12a und zu einer Übertragung einer Kraft, insbesondere einer Andrückkraft, von einem Bediener auf die Handwerkzeugmaschine 12a. Die Handwerkzeugmaschine 12a ist ferner mit einem lösbaren Zusatzhandgriff 48a ausgeführt. Hierbei kann der Zusatzhandgriff 48a über eine Rastverbindung oder andere, einem Fachmann als sinnvoll erscheinende Verbindungen lösbar am Werkzeugmaschinengehäuse 36a befestigt sein.

Zu einer Erzeugung eines Antriebsmoments und zu einer Erzeugung eines Schlagimpulses mittels der Schlagwerkvorrichtung 34a weist die Handwerkzeugmaschine 12a eine Antriebseinheit 50a auf. Über eine Abtriebseinheit 52a der Handwerkzeugmaschine 12a wird ein Antriebsmoment der Antriebseinheit 50a zur Erzeugung eines Schlagimpulses an die Schlagwerkvorrichtung 34a übertragen. Es ist jedoch auch denkbar, dass die Handwerkzeugmaschine 12a entkoppelt von der Abtriebseinheit 52a ausgebildet ist und die Antriebseinheit 50a zu einer Erzeugung eines Schlagimpulses im Wesentlichen direkt auf die Schlagwerkvorrichtung 34a einwirkt. Ein Schlagimpuls der Schlagwerkvorrichtung 34a wird auf eine, dem Fachmann bekannte Art und Weise erzeugt. Ferner wird über die Abtriebseinheit 52a das Antriebsmoment zu einer Erzeugung einer Rotationsbewegung des Einsatzwerkzeugs 42a über ein an der Werkzeugaufnahme 40a angeordnetes Drehmitnahmeelement (hier nicht näher dargestellt) an die Werkzeugaufnahme 40a übertragen. Somit weist die Handwerkzeugmaschine 12a eine, einem Fachmann zumindest im Wesentlichen bereits bekannte Ausgestaltung auf.

Die Handwerkzeugmaschine 12a ist als akkubetreibbare Handwerkzeugmaschine ausgebildet, die mittels der Handwerkzeugmaschinenenergieversorgungsvorrichtung 10a mit Energie versorgbar ist. Die Handwerkzeugmaschinenenergieversorgungsvorrichtung 10a ist als Handwerkzeugmaschinenakkumulatorvorrichtung ausgebildet. Hierbei umfasst die Handwerkzeugmaschinenenergieversorgungsvorrichtung 10a zu einer abnehmbaren Anordnung an der Handwerkzeugmaschine 12a zumindest eine Handwerkzeugmaschinenschnittstelle 14a. Die Handwerkzeugmaschinenschnittstelle 14a ist als lösbare Formschluss- und/oder Kraftschlussverbindungsschnittstelle ausgebildet. Somit ist die Handwerkzeugmaschinenenergieversorgungsvorrichtung 10a mittels der Handwerkzeugmaschinenschnittstelle 14a abnehmbar an einer Energieversorgungsaufnahmeschnittstelle 54a des Werkzeugmaschinengehäuses 36a der Handwerkzeugmaschine 12a anordenbar.

Die Handwerkzeugmaschinenschnittstelle 14a ist an einer Gehäuseeinheit 32a der Handwerkzeugmaschinenenergieversorgungsvorrichtung 10a angeordnet. Zu einer Führung der Gehäuseeinheit 32a während einer Anordnung der Handwerkzeugmaschinenenergieversorgungsvorrichtung 10a an der Handwerkzeugmaschine 12a umfasst die Handwerkzeugmaschinenschnittstelle 14a zumindest ein, einem Fachmann bereits bekanntes Führungselement (hier nicht näher dargestellt). Das Führungselement ist dazu vorgesehen, die Gehäuseeinheit 32a während einer Anordnung an der Handwerkzeugmaschine 12a translatorisch zu führen. Hierbei kann das Führungselement als Führungsrippe, als Führungsnut usw. ausgebildet sein. Bei einer Anordnung der Handwerkzeugmaschinenenergieversorgungsvorrichtung 10a an der Handwerkzeugmaschine 12a wirkt das Führungselement auf eine, einem Fachmann bereits bekannte Art und Weise mit einem Gegenführungselement (hier nicht näher dargestellt) der Energieversorgungsaufnahmeschnittstelle 54a zusammen. Das Gegenführungselement weist eine zum Führungselement korrespondierende Ausgestaltung auf. Ferner umfasst die Handwerkzeugmaschinenschnittstelle 14a zu einer Fixierung der Gehäuseeinheit 32a an der Handwerkzeugmaschine 12a zumindest ein Fixierelement (hier nicht näher dargestellt), das eine, einem Fachmann bereits bekannte Ausgestaltung aufweist. Hierbei kann das Fixerelement als federelastisches Rastelement oder einem anderen, einem Fachmann als sinnvoll erscheinendes Fixierelement ausgebildet sein. Das Fixierelement ist zu einer Fixierung der Gehäuseeinheit 32a an der Handwerkzeugmaschine 12a dazu vorgesehen, mit einem korrespondierend zum Fixierelement ausgebildeten Gegenfixierelement (hier nicht näher dargestellt) der Energieversorgungsaufnahmeschnittstelle 54a zusammenzuwirken. Zu einer Betätigung des Fixierelements und somit zu einer Lösung einer Fixierung der Gehäuseeinheit 32a an der Handwerkzeugmaschine 12a weist die Handwerkzeugmaschinenschnittstelle 14a zumindest ein Betätigungselement 58a auf. Das Betätigungselement 58a ist beweglich an der Gehäuseeinheit 32a gelagert. Hierbei ist das Betätigungselement 58a dazu vorgesehen, das Fixierelement zu einer Lösung einer formschlüssigen und/oder kraftschlüssigen Verbindung zwischen dem Fixierelement und dem Gegenfixierelement auf eine, einem Fachmann bereits bekannte Art und Weise zu bewegen.

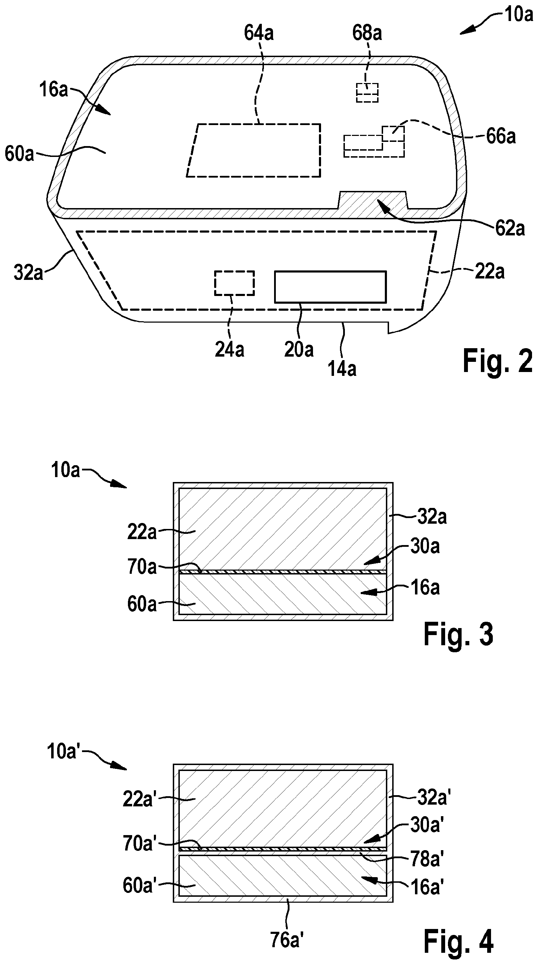

Figur 2 zeigt einen Teilschnitt der Handwerkzeugmaschinenenergieversorgungsvorrichtung 10a in einem von der Handwerkzeugmaschine 12a abgenommenen Zustand. Die Handwerkzeugmaschinenenergieversorgungsvorrichtung 10a weist zumindest eine Ortungseinheit 16a zumindest zu einer Ortung von Gegenständen in einem Werkstück und/oder zu einer Erfassung einer Gegenstandstemperatur eines in einem Werkstück angeordneten Gegenstands auf. Die Ortungseinheit 16a ist zumindest teilweise in der Gehäuseeinheit 32a angeordnet. Hierbei umfasst die Ortungseinheit 16a zumindest ein Elektronikträgerelement 60a, das in der Gehäuseeinheit 32a angeordnet ist. Das Elektronikträgerelement 60a ist als Leiterplatte ausgebildet. Zu einer Anordnung in der Gehäuseeinheit 32a weist das Elektronikträgerelement 60a zumindest einen Befestigungsbereich 62a auf. Der Befestigungsbereich 62a ist dazu vorgesehen, das Elektronikträgerelement 60a mittels einer formschlüssigen und/oder mittels einer kraftschlüssigen Verbindung in der Gehäuseeinheit 32a zu fixieren. Hierzu kann die Handwerkzeugmaschinenenergieversorgungsvorrichtung 10a beispielsweise zumindest ein Rastelement, zumindest eine Schraube, zumindest ein Klemmverschlusselement usw. umfassen, das zu einer Fixierung des Elektronikträgerelements 60a mit dem Befestigungsbereich 62a und/oder mit der Gehäuseeinheit 32a zusammenwirkt. Die Gehäuseeinheit 32a umgibt das Elektronikträgerelement 60a in einem in der Gehäuseeinheit 32a angeordneten Zustand um mehr als 60 % einer Gesamtausdehnung des Elektronikträgerelements 60a. Somit ist das Elektronikträgerelement 60a vollständig von Außenwänden der Gehäuseeinheit 32a umgeben (in Figur 3 schematisch dargestellt). Hierbei ist das Elektronikträgerelement 60a und somit zumindest ein Großteil der Ortungseinheit 16a auf einer der Handwerkzeugmaschinenschnittstelle 14a abgewandten Seite der Gehäuseeinheit 32a in der Gehäuseeinheit 32a angeordnet.

In einer alternativen Ausgestaltung der Handwerkzeugmaschinenenergieversorgungsvorrichtung 10a' hinsichtlich einer Anordnung der Ortungseinheit 16a' an der Gehäuseeinheit 32a' und insbesondere einer Anordnung des Elektronikträgerelements 60a' an der Gehäuseeinheit 32a' gemäß Figur 4 weist die Ortungseinheit 16a' ein Ortungsgehäuse 76a' auf, das zumindest teilweise einstückig mit der Gehäuseeinheit 32a' ausgebildet ist. Hierbei weist das Ortungsgehäuse 76a' zumindest ein Zwischenbodenelement 78a' auf, das das Elektronikträgerelement 60a' von einer Energiespeichereinheit 22a' der Handwerkzeugmaschinenenergieversorgungsvorrichtung 10a' abtrennt oder beabstandet anordnet. Hierbei ist das Elektronikträgerelement 60a' am Zwischenbodenelement 78a' angeordnet.

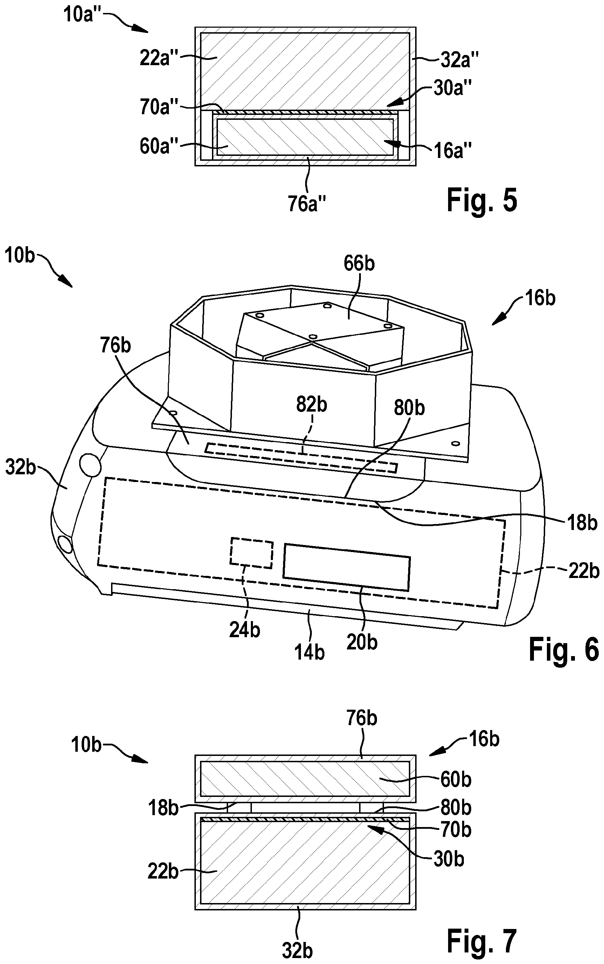

In einer weiteren alternativen Ausgestaltung der Handwerkzeugmaschinenenergieversorgungsvorrichtung 10a" hinsichtlich einer Anordnung der Ortungseinheit 16a" an der Gehäuseeinheit 32a" und insbesondere einer Anordnung des Elektronikträgerelements 60a" an der Gehäuseeinheit 32a" gemäß Figur 5 weist die Ortungseinheit 16a" ein Ortungsgehäuse 76a" auf, das zumindest separat zu der Gehäuseeinheit 32a" ausgebildet ist. Das Ortungsgehäuse 76a" ist vollständig innerhalb der Gehäuseeinheit 32a" angeordnet. Das Ortungsgehäuse 76a" ist hierbei dazu vorgesehen, die Ortungseinheit 16a"hermetisch von einer Energiespeichereinheit 22a" der Handwerkzeugmaschinenenergieversorgungsvorrichtung 10a" abzutrennen, um eine vorteilhaft thermische Isolation zu ermöglichen. Hierbei ist das Elektronikträgerelement 60a" innerhalb des Ortungsgehäuses 76a" angeordnet.

Weitere, einem Fachmann als sinnvoll erscheinende Ausgestaltungen der Handwerkzeugmaschinenenergieversorgungsvorrichtung 10a hinsichtlich einer Anordnung der Ortungseinheit 16a an der Gehäuseeinheit 32a und insbesondere einer Anordnung des Elektronikträgerelements 60a an der Gehäuseeinheit 32a sind ebenfalls denkbar.

Das Elektronikträgerelement 60a ist dazu vorgesehen, Bauteile der Ortungseinheit 16a aufzunehmen und elektronisch miteinander zu verbinden. Hierbei ist zumindest ein Ortungselement 66a der Ortungseinheit 16a an dem Elektronikträgerelement 60a angeordnet. Das Ortungselement 66a ist als Induktivsensor ausgebildet. Zudem umfasst die Ortungseinheit 16a zumindest ein weiteres Ortungselement 68a, das an dem Elektronikträgerelement 60a angeordnet ist. Das weitere Ortungselement 68a ist als AC-Sensor ausgebildet. Es ist jedoch auch denkbar, dass die Ortungseinheit 16a lediglich ein Ortungselement 66a umfasst, das am Elektronikträgerelement 60a angeordnet ist. Zudem ist jedoch auch denkbar, dass die Ortungseinheit 16a eine von zwei abweichende Anzahl an Ortungselementen 66a, 68a umfasst, die am Elektronikträgerelement 60a angeordnet sind, wobei die Ortungselemente 66a, 68a als Sensoren unterschiedlicher Sensorart oder als Sensoren gleicher Sensorart ausgebildet sind.

Ferner umfasst die Handwerkzeugmaschinenenergieversorgungsvorrichtung 10a zumindest eine Auswerteeinheit 64a, die an dem Elektronikträgerelement 60a angeordnet ist. Die Auswerteeinheit 64a ist zu einer Auswertung von zumindest einer mittels der Ortungseinheit 16a erfassten Ortungskenngröße vorgesehen. Hierbei ist die Auswerteeinheit 64a dazu vorgesehen, mittels des Ortungselements 66a und des weiteren Ortungselements 68a erfasste Ortungskenngrößen auszuwerten. Hierdurch ist eine Bestimmung einer Position und/oder eines Gegenstands in einem Werkstück auf eine, einem Fachmann bereits bekannte Art und Weise möglich.

Des Weiteren umfasst die Handwerkzeugmaschinenenergieversorgungsvorrichtung 10a zumindest eine Ausgabeeinheit 20a zu einer Ausgabe eines Signals in Abhängigkeit einer mittels der Ortungseinheit 16a erfassten Ortungskenngröße. Die Ausgabeeinheit 20a ist elektronisch mit der Auswerteeinheit 64a verbunden. Hierbei wird die Ausgabeeinheit 20a zu einer Ausgabe eines Signals von der Auswerteeinheit 64a angesteuert. Die Ausgabeeinheit 20a ist als optische Ausgabeeinheit ausgebildet. Die Ausgabeeinheit 20a umfasst zumindest eine LED zu einer Ausgabe eines Signals. Ferner ist es denkbar, dass die Ausgabeeinheit 20a alternativ oder zusätzlich zu der zumindest einen LED ein LC-Display umfasst, mittels dessen einem Bediener eine Position eines Gegenstands im Werkstück anzeigbar ist. Es ist jedoch auch denkbar, dass die Ausgabeeinheit 20a alternativ oder zusätzlich als haptische und/oder als akkustische Ausgabeeinheit 20a vorgesehen ist und dass die Ausgabeeinheit 20a ein von einer LED verschiedenes Ausgabeelement umfasst.

Zudem ist die Ausgabeeinheit 20a dazu vorgesehen, ein Signal in Abhängigkeit einer Energiespeichereinheitskenngröße der Energiespeichereinheit 22a, wie beispielsweise einen Ladezustand usw., auszugeben. Hierbei ist es denkbar, dass die Ausgabeeinheit 20a in zumindest einem Betriebszustand die zumindest eine LED zur Ausgabe eines Signals in Abhängigkeit einer mittels der Ortungseinheit 16a erfassten Ortungskenngröße nutzt und in einem weiteren Betriebszustand die zumindest eine LED zur Ausgabe eines Signals in Abhängigkeit einer Energiespeichereinheitskenngröße nutzt. Es ist jedoch auch denkbar, dass die Ausgabeeinheit 20a eine Vielzahl an LEDs aufweist, wobei zumindest eine LED zu einer Ausgabe eines Signals in Abhängigkeit einer mittels der Ortungseinheit 16a erfassten Ortungskenngröße vorgesehen ist und zumindest eine weitere LED zur Ausgabe eines Signals in Abhängigkeit einer Energiespeichereinheitskenngröße vorgesehen ist.

Ferner umfasst die Handwerkzeugmaschinenenergieversorgungsvorrichtung 10a zumindest die Energiespeichereinheit 22a, die zumindest dazu vorgesehen ist, die Ortungseinheit 16a zumindest in einem Zustand mit Energie zu versorgen. Die Energiespeichereinheit 22a ist als Akkumulatoreinheit ausgebildet. Die Handwerkzeugmaschinenenergieversorgungsvorrichtung 10a weist zudem zumindest eine Isolationseinheit 30a zu einer zumindest teilweisen Abschirmung der Ortungseinheit 16a vor thermischen Störgrößen auf. Die Isolationseinheit 30a ist hierbei dazu vorgesehen, eine thermische Dämmung zwischen der Energiespeichereinheit 22a und der Ortungseinheit 16a zu realisieren. Hierzu umfasst die Isolationseinheit 30a zumindest ein Isolationselement 70a, das zwischen der Energiespeichereinheit 22a und der Ortungseinheit 16a angeordnet ist (Figur 3). Das Isolationselement 70a kann hierbei beispielsweise als Strukturelement ausgebildet sein, das Lüftungsdurchgänge aufweist oder es kann als ein anderes, einem Fachmann als sinnvoll erscheinendes Isolationselement, wie beispielsweise ein Hartschaumdämmelement, ein Polystyroldämmelement, ein Polyurethandämmelement usw. ausgebildet sein. Es ist auch denkbar, dass die Isolationseinheit 30a alternativ oder zusätzlich zumindest ein Kühlelement zu einem Abtransport von Wärme umfasst, wie beispielsweise ein Kühlrippenelement. Denkbar wäre auch eine Ausgestaltung der Handwerkzeugmaschinenenergieversorgungsvorrichtung 10a mit einer aktiven Kühl- und/oder Lüftungseinheit, wie beispielsweise eine Lüftereinheit, eine Wasserkühlungseinheit usw., die mittels der Energiespeichereinheit 22a mit Energie versorgbar ist.

Des Weiteren umfasst die Handwerkzeugmaschinenenergieversorgungsvorrichtung 10a zumindest eine Datenkommunikationsschnittstelle 24a zu einer Übertragung zumindest einer mittels der Ortungseinheit 16a erfassten Ortungskenngröße auf zumindest eine Steuer- und/oder Regeleinheit 26a der Handwerkzeugmaschine 12a und/oder auf ein externes Datengerät 28a (in Figur 1 lediglich gestrichelt dargestellt). Es ist jedoch auch denkbar, dass die Handwerkzeugmaschine 12a eine zusätzlich Datenkommunikationsschnittstelle aufweist, die dazu vorgesehen ist, elektronische Daten auf das externe Datengerät 28a zu übertragen, um beispielsweise eine Auswertung bzw. eine Analyse vornehmen zu können usw. Die Steuer- und/oder Regeleinheit 26a der Handwerkzeugmaschine 12a ist dazu vorgesehen, zumindest einen Betriebsfunktionsparameter der Handwerkzeugmaschine 12a in Abhängigkeit von zumindest einer mittels der Ortungseinheit 16a erfassten Ortungskenngröße einzustellen. Hierbei ist es denkbar, dass mittels einer Kommunikation der Ortungseinheit 16a und der Handwerkzeugmaschine 12a Informationen über ein Werkstückmaterial zur Verfügung gestellt werden können, mittels denen zumindest ein Betriebsfunktionsparameter wie z.B. eine Drehzahl, eine Schwingungsdämpfung oder eine Schlagenergie durch die Steuer- und/oder Regeleinheit 26a automatisch einstellbar ist.

Ferner ist es denkbar, dass mittels einer Kommunikation der Ortungseinheit 16a und der Handwerkzeugmaschine 12a Informationen über eine Tiefe eines georteten Gegenstands zur Verfügung gestellt werden können, die zu einer Einstellung und/oder Begrenzung einer maximalen Bohrtiefe durch die Steuer- und/oder Regeleinheit 26a nutzbar ist. Hierzu umfasst die Handwerkzeugmaschine 12a vorzugsweise zumindest einen Bohrtiefensensor 72a (Figur 1). Zudem ist es denkbar, dass infolge einer Kommunikation der Ortungseinheit 16a und der Handwerkzeugmaschine 12a zumindest eine Schutzmaßnahme, wie beispielsweise ein automatisches Abschalten, ein automatisches Verriegeln usw., durch die Steuer- und/oder Regeleinheit 26a einleitbar ist, wenn mittels der Ortungseinheit 16a, beispielsweise durch einen Beschleunigungssensor (hier nicht näher dargestellt) der Ortungseinheit 16a, ein zu Boden fallen der Handwerkzeugmaschine 12a erkannt wird. Des Weiteren ist es denkbar, dass mittels einer Kommunikation der Ortungseinheit 16a und der Handwerkzeugmaschine 12a eine berührungslose Steuerung, wie beispielsweise eine Gestensteuerung, der Handwerkzeugmaschine 12a, insbesondere bei einer Ausgestaltung der Ortungseinheit 16a mit zumindest einem Radarsensor, durch die Steuer- und/oder Regeleinheit 26a realisierbar ist. Zudem kann mittels einer Kommunikation der Ortungseinheit 16a und dem externen Datengerät 28a eine Auswertung der Ortungseinheit 16a ermöglicht werden oder es kann ein Tracking der Handwerkzeugmaschinenenergieversorgungsvorrichtung 10a oder der mit der Handwerkzeugmaschinenenergieversorgungsvorrichtung 10a verbundenen Handwerkzeugmaschine 12a ermöglicht werden. Hierdurch kann eine Überwachungsfunktion erreicht werden, die einem Bediener einen Standort der Handwerkzeugmaschinenenergieversorgungsvorrichtung 10a oder der mit der Handwerkzeugmaschinenenergieversorgungsvorrichtung 10a verbundenen Handwerkzeugmaschine 12a angibt. Die Datenkommunikationsschnittstelle 24a ist vorzugsweise als drahtlose Datenkommunikationsschnittstelle 24a ausgebildet. Es ist jedoch auch denkbar, dass die Datenkommunikationsschnittstelle 24a in einer alternativen Ausgestaltung der Erfindung als drahtgebundene Datenkommunikationsschnittstelle 24a ausgebildet ist.

Mittels der Datenkommunikationsschnittstelle 24a ist die Ortungseinheit 16a zudem über die Steuer- und/oder Regeleinheit 26a mit einer Handwerkzeugmaschinenausgabeeinheit 74a der Handwerkzeugmaschine 12a verbindbar. Somit ist eine Ausgabe eines Signals (optisches/akustisches/haptisches Signal) mittels der Handwerkzeugmaschinenausgabeeinheit 74a in Abhängigkeit einer mittels der Ortungseinheit 16a erfassten Ortungskenngröße erreichbar. Besteht eine Datenverbindung zwischen der Ortungseinheit 16a und der Handwerkzeugmaschinenausgabeeinheit 74a, ist es denkbar, dass Ausgabeelemente der Handwerkzeugmaschinenausgabeeinheit 74a zur Ausgabe eines Signals in Abhängigkeit einer mittels der Ortungseinheit 16a erfassten Ortungskenngröße vorgesehen sind, während die Ausgabeeinheit 20a in einen Bereitschaftsmodus geschalten ist.

In Figuren 6 und 7 ist ein alternatives Ausführungsbeispiel dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem in den Figuren 1 bis 5 beschriebenen, ersten Ausführungsbeispiel, wobei bezüglich gleichbleibender Bauteile, Merkmale und Funktionen auf die Beschreibung des ersten Ausführungsbeispiels in den Figuren 1 bis 5 verwiesen werden kann.

Figuren 6 und 7 zeigen eine alternative Handwerkzeugmaschinenenergieversorgungsvorrichtung 10b. Die Handwerkzeugmaschinenenergieversorgungsvorrichtung 10b ist zu einer Energieversorgung einer Handwerkzeugmaschine 12a gemäß Figur 1 vorgesehen. Hierbei umfasst die Handwerkzeugmaschinenenergieversorgungsvorrichtung 10b zumindest eine Handwerkzeugmaschinenschnittstelle 14b zu einer abnehmbaren Anordnung an der Handwerkzeugmaschine 12a. Somit ist die in den Figuren 6 und 7 dargestellte Handwerkzeugmaschinenenergieversorgungsvorrichtung 10b alternativ zu der in den Figuren 1 bis 5 dargestellten Handwerkzeugmaschinenenergieversorgungsvorrichtung 10b an der Handwerkzeugmaschine 12a anordenbar.

Die Handwerkzeugmaschinenenergieversorgungsvorrichtung 10b umfasst zumindest eine Ortungseinheitsaufnahmeschnittstelle 18b zu einer Aufnahme einer Ortungseinheit 16b zumindest in einem an der Handwerkzeugmaschine 12a angeordneten Zustand. Somit bilden die Handwerkzeugmaschinenenergieversorgungsvorrichtung 10b und die Ortungseinheit 16b zusammen ein Ortungs- und Energieversorgungssystem. Die Ortungseinheit 16b umfasst hierbei bevorzugt zumindest ein Ortungsgehäuse 76b, das zumindest eine zu der Ortungseinheitsaufnahmeschnittstelle 18b korrespondierende Kopplungsschnittstelle 80b aufweist. Die Ortungseinheitsaufnahmeschnittstelle 18b ist auf einer der Handwerkzeugmaschinenschnittstelle 14b abgewandten Seite einer Gehäuseeinheit 32b der Handwerkzeugmaschinenenergieversorgungsvorrichtung 10b an der Gehäuseeinheit 32b angeordnet. Somit ist die Ortungseinheit 16b abnehmbar an der Gehäuseeinheit 32b der Handwerkzeugmaschinenenergieversorgungsvorrichtung 10b anordenbar. Die Ortungseinheitsaufnahmeschnittstelle 18b ist als formschlüssig und/oder als kraftschlüssig wirkende Verbindungschnittstelle ausgebildet, wie beispielsweise als Rastelementschnittstelle, als Bajonettverschlussschnittstelle, als Klettverschlussverbindungsschnittstelle, als Einschubverbindungsschnittstelle usw.

Ferner umfasst die Ortungseinheit 16b zumindest eine Energieversorgungs- und/oder Energiespeichereinheit 82b, die dazu vorgesehen ist, die Ortungseinheit 16b, in einem von der Handwerkzeugmaschinenenergieversorgungsvorrichtung 10b abgenommenen Zustand mit Energie zu versorgen. In einem an der Handwerkzeugmaschinenenergieversorgungsvorrichtung 10b angeordneten Zustand ist die Energieversorgungs- und/oder Energiespeichereinheit 82b mittels einer Energiespeichereinheit 22b der Handwerkzeugmaschinenenergieversorgungsvorrichtung 10b wiederaufladbar. Somit umfasst die Handwerkzeugmaschinenenergieversorgungsvorrichtung 10b zumindest eine Energiespeichereinheit 22b, die zumindest dazu vorgesehen ist, die Ortungseinheit 16b zumindest in einem Zustand mit Energie zu versorgen.

Des Weiteren umfasst die Handwerkzeugmaschinenenergieversorgungsvorrichtung 10b zumindest eine Ausgabeeinheit 20b zu einer Ausgabe eines Signals in Abhängigkeit einer mittels der Ortungseinheit 16b erfassten Ortungskenngröße. Die Ausgabeeinheit 20b ist nach einer Anordnung der Ortungseinheit 16b an der Ortungseinheitsaufnahmeschnittstelle 18b elektronisch mit der Ortungseinheit 16b verbunden. Hierdurch kann infolge einer Erfassung einer Ortungskenngröße mittels eines als Radarsensor ausgebildeten Ortungselements 66b der Ortungseinheit 16b ein Signal ausgegeben werden. Es ist jedoch auch denkbar, dass die Ortungseinheit 16b eine weitere Ausgabeeinheit (hier nicht näher dargestellt) umfasst, um in einem von der Handwerkzeugmaschinenenergieversorgungsvorrichtung 10b abgenommenen Zustand ein Signal in Abhängigkeit einer mittels der Ortungseinheit 16b erfassten Ortungskenngröße auszugeben.

Des Weiteren umfasst die Handwerkzeugmaschinenenergieversorgungsvorrichtung 10b zumindest eine Datenkommunikationsschnittstelle 24b zu einer Übertragung zumindest einer mittels der Ortungseinheit 16b erfassten Ortungskenngröße auf zumindest eine Steuer- und/oder Regeleinheit 26b der Handwerkzeugmaschine 12a und/oder auf ein externes Datengerät (hier nicht näher dargestellt). Hierbei ist die Datenkommunikationsschnittstelle 24b dazu vorgesehen, elektronisch Daten in einem an der Handwerkzeugmaschinenenergieversorgungsvorrichtung 10b angeordneten Zustand auf zumindest eine Steuer- und/oder Regeleinheit 26b der Handwerkzeugmaschine 12a und/oder auf das externe Datengerät zu übertragen.

Ferner weist Handwerkzeugmaschinenenergieversorgungsvorrichtung 10b zumindest eine Isolationseinheit 30b zu einer zumindest teilweisen Abschirmung der Ortungseinheit 16b vor thermischen Störgrößen auf. Die Isolationseinheit 30b ist hierbei in der Gehäuseeinheit 32b der Handwerkzeugmaschinenenergieversorgungsvorrichtung 10b angeordnet. Somit ist die Isolationseinheit 30b dazu vorgesehen, die Ortungseinheit 16b zumindest in einem an der Handwerkzeugmaschinenenergieversorgungsvorrichtung 10b angeordneten Zustand der Ortungseinheit 16b zumindest teilweise vor thermischen Störgrößen abzuschirmen. Hinsichtlich weiterer Funktionen und Merkmale der in den Figuren 6 und 7 dargestellten Handwerkzeugmaschinenenergieversorgungsvorrichtung 10b darf auf die Beschreibung der in Figuren 1 bis 5 dargestellten Handwerkzeugmaschinenenergieversorgungsvorrichtung 10a verwiesen werden.

## Patentansprüche

1. Handwerkzeugmaschinenenergieversorgungsvorrichtung, insbesondere Handwerkzeugmaschinenakkumulatorvorrichtung, zu einer Energieversorgung einer Handwerkzeugmaschine (12a), mit zumindest einer Handwerkzeugmaschinenschnittstelle (14a; 14b) zu einer abnehmbaren Anordnung an der Handwerkzeugmaschine (12a), ferner aufweisend zumindest eine Ortungseinheit (16a; 16b) zu einer Ortung von Gegenständen in einem Werkstück, **dadurch gekennzeichnet, dass** die Handwerkzeugmaschinenenergieversorgungsvorrichtung einen Temperatursensor umfasst, insbesondere einen in einer Gehäuseeinheit der Handwerkzeugmaschinenenergieversorgungsvorrichtung integrierten Temperatursensor umfasst, der dazu vorgesehen ist, zumindest eine Temperaturkenngröße an die Ortungseinheit zu übermitteln.

2. Handwerkzeugmaschinenenergieversorgungsvorrichtung nach Anspruch 1, insbesondere nach dem Oberbegriff des Anspruchs 1, **gekennzeichnet durch** zumindest eine Ortungseinheitsaufnahmeschnittstelle (18b) zu einer Aufnahme einer Ortungseinheit (16b) zumindest in einem an der Handwerkzeugmaschine (12a) angeordneten Zustand.

3. Handwerkzeugmaschinenenergieversorgungsvorrichtung nach Anspruch 1 oder 2, **gekennzeichnet durch** zumindest eine Ausgabeeinheit (20a; 20b) zu einer Ausgabe eines Signals in Abhängigkeit einer mittels der Ortungseinheit (16a; 16b) erfassten Ortungskenngröße.

4. Handwerkzeugmaschinenenergieversorgungsvorrichtung nach einem der vorhergehenden Ansprüche, **gekennzeichnet durch** zumindest eine Energiespeichereinheit (22a; 22b), die zumindest dazu vorgesehen ist, die Ortungseinheit (16a; 16b) zumindest in einem Zustand mit Energie zu versorgen.

5. Handwerkzeugmaschinenenergieversorgungsvorrichtung nach einem der vorhergehenden Ansprüche, **gekennzeichnet durch** zumindest eine Datenkommunikationsschnittstelle (24a; 24b) zu einer Übertragung zumindest einer mittels der Ortungseinheit (16a; 16b) erfassten Ortungskenngröße auf zumindest eine Steuer- und/oder Regeleinheit (26a) der Handwerkzeugmaschine (12a) und/oder eines externen Datengeräts (28a).

6. Handwerkzeugmaschinenenergieversorgungsvorrichtung nach einem der vorhergehenden Ansprüche, **gekennzeichnet durch** zumindest eine Isolationseinheit (30a; 30b) zu einer zumindest teilweisen Abschirmung der Ortungseinheit (16a; 16b) vor thermischen Störgrößen.

7. Handwerkzeugmaschinenenergieversorgungsvorrichtung zumindest nach Anspruch 1, **gekennzeichnet durch** zumindest eine Gehäuseeinheit (32a), in der die Ortungseinheit (16a) zumindest teilweise angeordnet ist.

8. Ortungseinheit (16a; 16b) einer Handwerkzeugmaschinenenergieversorgungsvorrichtung nach einem der vorhergehenden Ansprüche.

9. Handwerkzeugmaschinensystem mit zumindest einer Handwerkzeugmaschine (12a) und mit zumindest einer Handwerkzeugmaschinenenergieversorgungsvorrichtung nach einem der Ansprüche 1 bis 8.

10. Handwerkzeugmaschinensystem nach Anspruch 9, **dadurch gekennzeichnet, dass** die Handwerkzeugmaschine (12a) zumindest eine Steuer- und/oder Regeleinheit (26a) aufweist, die dazu vorgesehen ist, zumindest einen Betriebsfunktionsparameter der Handwerkzeugmaschine (12a) in Abhängigkeit von zumindest einer mittels der Ortungseinheit (16a; 16b) erfassten Ortungskenngröße einzustellen.

11. Handwerkzeugmaschinenenergieversorgungsvorrichtung nach einem der vorhergehenden Ansprüche, **dadurch gekennzeichnet, dass** der Temperatursensor drahtgebunden oder drahtlos mit der Ortungseinheit (16a; 16b) verbunden ist.

12. Handwerkzeugmaschinenenergieversorgungsvorrichtung nach einem der vorhergehenden Ansprüche, **dadurch gekennzeichnet, dass** unter Verwendung des Temperatursensors eine Kompensationsmaßnahme durchführbar ist, insbesondere eine Rekalibrierung oder Korrektur eines mit der Ortungseinheit (16a; 16b) erfassten aktuellen Ortungswertes durchführbar ist.

## Claims

1. Hand-held power-tool energy supply device, in particular a hand-held power tool battery device, for supplying energy to a hand-held power tool (12a), having at least one hand-held power-tool interface (14a; 14b) for removable disposition on the hand-held power tool (12a), furthermore having at least one locating unit (16a; 16b) for locating objects in a workpiece, **characterized in that** the hand-held power-tool energy supply device comprises a temperature sensor, in particular comprises a temperature sensor integrated in a housing unit of the hand-held power-tool energy supply device, which temperature sensor is provided for transmitting at least one temperature characteristic to the locating unit.

2. Hand-held power-tool energy supply device according to Claim 1, in particular according to the preamble of Claim 1, **characterized by** at least one locating-unit receiving interface (18b) for receiving a locating unit (16b), at least when in a state of having been disposed on the hand-held power tool (12a).

3. Hand-held power-tool energy supply device according to Claim 1 or 2, **characterized by** at least one output unit (20a; 20b) for outputting a signal in dependence on a locating characteristic sensed by means of the locating unit (16a; 16b).

4. Hand-held power-tool energy supply device according to any one of the preceding claims, **characterized by** at least one energy storage unit (22a; 22b), which is provided, at least, to supply energy to the locating unit (16a; 16b), at least in one state.

5. Hand-held power-tool energy supply device according to any one of the preceding claims, **characterized by** at least one data communication interface (24a; 24b) for transmitting at least one locating characteristic, sensed by means of the locating unit (16a; 16b), to at least one open-loop and/or closed-loop control unit (26a) of the hand-held power tool (12a) and/or of an external data device (28a).

6. Hand-held power-tool energy supply device according to any one of the preceding claims, **characterized by** at least one insulation unit (30a; 30b) for at least partially shielding the locating unit (16a; 16b) against thermal disturbance variables.

7. Hand-held power-tool energy supply device at least according to Claim 1, **characterized by** at least one housing unit (32a), in which the locating unit (16a) is at least partially disposed.

8. Locating unit (16a; 16b) of a hand-held power-tool energy supply device according to any one of the preceding claims.

9. Hand-held power-tool system, comprising at least one hand-held power tool (12a) and comprising at least one hand-held power-tool energy supply device according to any one of Claims 1 to 8.

10. Hand-held power-tool system according to Claim 9, **characterized in that** the hand-held power tool (12a) has at least one open-loop and/or closed-loop control unit (26a), which is provided to set at least one operating function parameter of the hand-held power tool (12a) in dependence on at least one locating characteristic sensed by means of the locating unit (16a; 16b).

11. Hand-held power-tool energy supply device according to one of the preceding claims, **characterized in that** the temperature sensor is connected to the locating unit (16a; 16b) by a wired connection or wirelessly.

12. Hand-held power-tool energy supply device according to one of the preceding claims, **characterized in that** a compensation measure, in particular a recalibration or correction of a present locating value detected by means of the locating unit (16a; 16b), can be implemented using the temperature sensor.

## Revendications

1. Ensemble d'alimentation en énergie pour outil manuel motorisé, en particulier ensemble d'accumulateur pour outil manuel motorisé, assurant l'alimentation en énergie d'un outil manuel motorisé (12a) et présentant au moins une interface (14a; 14b) d'outil manuel motorisé permettant un placement amovible sur l'outil manuel motorisé (12a), et présentant en outre au moins une unité de localisation (16a; 16b) qui permet de localiser des objets dans une pièce d'oeuvre, **caractérisé en ce que**
l'ensemble d'alimentation en énergie pour outil manuel motorisé comporte une sonde de température, en particulier une sonde de température intégrée dans une unité de boîtier de l'ensemble d'alimentation en énergie pour outil manuel motorisé et prévue pour déterminer au moins une grandeur caractéristique de température sur l'unité de localisation.

2. Ensemble d'alimentation en énergie pour outil manuel motorisé selon la revendication 1, notamment selon le préambule de la revendication 1, **caractérisé par** au moins une interface (18b) de réception de l'unité de localisation qui reçoit une unité de localisation (16b) au moins dans une position disposée sur l'outil manuel motorisé (12a).

3. Ensemble d'alimentation en énergie pour outil manuel motorisé selon les revendications 1 ou 2, **caractérisé par** au moins une unité de sortie (20a; 20b) qui délivre un signal en fonction d'une grandeur caractéristique de localisation saisie au moyen de l'unité de localisation (16a; 16b).

4. Ensemble d'alimentation en énergie pour outil manuel motorisé selon l'une des revendications précédentes, **caractérisé par** au moins une unité (22a; 22b) d'accumulation d'énergie qui est prévue au moins pour alimenter en énergie l'unité de localisation (16a; 16b) dans au moins une situation.

5. Ensemble d'alimentation en énergie pour outil manuel motorisé selon l'une des revendications précédentes, **caractérisé par** au moins une interface (24a; 24b) de communication de données qui assure le transfert d'au moins une grandeur caractéristique de localisation, saisie au moyen de l'unité de localisation (16a; 16b), sur au moins une unité de commande et/ou de régulation (26a) de l'outil manuel motorisé (12a) et/ou d'un appareil externe de données (28a).

6. Ensemble d'alimentation en énergie pour outil manuel motorisé selon l'une des revendications précédentes, **caractérisé par** au moins une unité d'isolation (30a; 30b) qui protège au moins partiellement l'unité de localisation (16a; 16b) vis-à-vis de grandeurs parasite thermiques.

7. Ensemble d'alimentation en énergie pour outil manuel motorisé selon au moins la revendication 1, **caractérisé par** au moins une unité de boîtier (32a) dans laquelle l'unité de localisation (16a) est au moins en partie disposée.

8. Unité de localisation (16a; 16b) d'un ensemble d'alimentation en énergie pour outil manuel motorisé selon l'une des revendications précédentes.

9. Système d'outil manuel motorisé présentant au moins un outil manuel motorisé (12a) et au moins un ensemble d'alimentation en énergie pour outil manuel motorisé selon l'une des revendications 1 à 8.

10. Système d'outil manuel motorisé selon la revendication 9, **caractérisé en ce que** l'outil manuel motorisé (12a) présente au moins une unité de commande et/ou de régulation (26a) conçue pour établir au moins un paramètre fonctionnel de fonctionnement de l'outil manuel motorisé (12a) en fonction d'au moins une grandeur caractéristique de localisation saisie au moyen de l'unité de localisation (16a; 16b).

11. Ensemble d'alimentation en énergie pour outil manuel motorisé selon l'une des revendications précédentes, **caractérisé en ce que** l'ensemble de température est relié à l'unité de localisation (16a; 16b) par fils ou sans fil.

12. Ensemble d'alimentation en énergie pour outil manuel motorisé selon l'une des revendications précédentes, **caractérisé en ce qu'**en recourant au capteur de température, une disposition de compensation peut être réalisée, en particulier un réétalonnage ou une correction d'une valeur de localisation actualisée saisie par l'unité de localisation (16a; 16b).
